# EUROPEAN PATENT APPLICATION

(11) **EP 0 917 333 A1**
(43) Date of publication of application: **19.05.1999**
(21) Application number: 97309148.1
(22) Date of filing: 13.11.1997
(51) Int. Cl.: H04M 3/42

(54) **Information gathering system**

(71) Applicant: BRITISH TELECOMMUNICATIONS public limited company, London EC1A 7AJ (GB)
(72) Inventor: The designation of the inventor has not yet been filed
(74) Representative: Lidbetter, Timothy Guy Edwin

(57) **Abstract**

An audience participation system is disclosed, in which the users are invited to initiate a voting process by dialling a predetermined number using one of the conventional short code memory buttons on a DECT cordless telephone 1, or specialised equipment incorporating DECT technology, are connected to a Computer/Telephony Interface (CTI) unit 4 via a wireless Private Branch Exchange (WPBX) 2. The Computer/Telephony Interface Unit can use calling line identity to identify any attempted callers who are not eligible to vote, e.g. calling from remote lines. Some remote lines may be authorised to allow votes to be contributed from authorised parties elsewhere than in the local auditorium.

To vote, the users transmit DTMF tones using the keys of their telephone handsets, or speak into their handsets if voice prompts are to be used. A separate channel is provided between each cordless telephone or remote user and the Computer/Telephony Interface unit 4. The Computer/Telephony Interface unit 4 can therefore identify each individual vote, and ensure that only one vote is received from each telephone.

The DTMF tones or other are raw voting data which is transmitted to the computer 5 for analysing the raw voting data, for display of voting statistics to the audience on a display browser 6. Since the identity of each handset is known to the Computer/Telephony Interface Unit 4, demographic data previously stored relating to the individual users of the handsets, or to earlier voting results, may be correlated to provide further information for processing by the computer 5.

Variations of the system are disclosed for use in examinations, and for use in exhibitions etc, the information to be transmitted being selected according to the currently serving radio base station, and pre-programmed information selected by the user.

## Description

This invention relates to opinion gathering systems of the kind installed in conference centres and the like .The invention also has application to proficiency examinations, tourist guides and the like.

Electronic voting is now being used to collect instant opinion from audiences at various events e.g. marketing or personnel events, television studio audiences, and in politics. Apparatus operated by the audience is used to deliver instant opinion on questions posed either by text projected on a screen or by a human compère. Voting is achieved by pressing a keypad. The votes are processed and the results of the opinion survey are then delivered to the audience or compère.

At present, the equipment used for electronic audience participation is based on specialised terminals, for convenience these are usually 'cordless' devices using polled infra-red pulse communications. The audience is surrounded by infrared base stations all linked to a computer which controls the system and generates the text and graphics displayed on a computer screen. The screen is usually displayed on a large screen for all the audience to see.

A question is posed by a human presenter or displayed as text on the screen. The audience members vote by pressing terminal keys and their percentage participation is displayed on the screen in real time. When no more votes are being cast, the operator of the system disables the communications and enables the generation of a graphics screen to display the results e.g. as bar graphs. At the end of the session various written reports are generated.

The specialist Infra-Red equipment can interfere with the use of other infra-red equipment at the same time (e.g. the remote control of a slide projector). Moreover, the handsets are specialised for this application making them relatively expensive. Moreover, only the audience in the chamber (or other specially-equipped areas) can participate.

It is also known to provide audience participation facilities, usually for remote audiences such as television viewers, newspaper readers, etc. in which the audience is invited to telephone one of a series of numbers, according to their voting preference. Call-logging technology allows the number of calls made to each number to be measured, thereby measuring the votes cast. This system is obviously open to abuse, as there is no control over who votes, and in particular multiple voting by the same person is difficult to prevent. Moreover, for many applications a series of questions is required to be answered. The provision of sufficient telephone numbers to cater for each possible answer to each question can be difficult.

According to the invention there is provided a Computer/Telephony Interface Unit having means for receiving a plurality of data-carrying telephone calls concurrently, means for storing the data carried in the telephone calls, and means for processing the data so received to generate information relating to the data received. This invention allows standard telephones to be used whilst allowing control of usage of the system to a limited group. Conveniently, these may be cordless telephones. Alternatively, they may be units having more limited functionality than standard cordless telephones (thereby making them cheaper, and less attractive to pilferers), but making use of standard cordless telephone components to reduce costs. During voting, a call is made to a pre-programmed number (identifying the caller by CLI) and key presses made to register votes. Alternatively voice recognition could be used. The display of results can be delivered using Internet/lntraNet technology.

This invention allows any standard telephone terminal to be used. These are potentially less costly and have many other applications. In particular, such standard terminals are provided with two-way call facilities, allowing provision of a personalised speech or audio stream to each participant. For example, voting instructions or results could be made available in several languages, the required language being selected for each handset according to its Calling Line Identity. Preferably the interface unit is arranged for operation with a private exchange, to allow the majority of calls to be handled without using the public switched network. The system is also capable of use with a virtual private exchange system, embedded in the public exchange and providing specialised facilities for a defined subset of lines forming the private network. Voting can be extended to a remote audience using the public switched telephone network for the voting and Internet/IntraNet for the display. Preferably the private exchange is a wireless (radio) exchange, for use with "cordless" radio telephones. The use of standard radio equipment means that radio interference is controlled, and there is no infra-red interference with remote control equipment.

As well as simple opinion-seeking, the system has other applications. For example, in the field of education, strict security is necessary in all aspects of examinations, in particular to allow the distribution of question papers to several examination centres without any possibility that the candidates can have prioir sight of the question papers, and to prevent one candidate copying another's answers during the examiniation itself. The present system allows the questions to be transmitted to the candidates instantaneously at the time of the examination, and the answers to be transmitted to the examiner (or automated marking processor) instatntaneously, thereby avoiding many of the security problems of conventional systems. Different candidates may also be given questions in a different sequence, or be required to give different responses for the same answer. For example, in a multiple-choice question the candidates may all be presented with the same possible answers from which to select the correct one, but in a different order, so that for one candidate the correct answer requires key "2" to be pressed, but for another candidate the correct answer requires "3".

The system may be used as an audio guide for exhibition visitors. When the user, carrying a portable unit, reaches an exhibit of interest, he presses a button on the unit for a commentary on the exhibit. The correct commentary is selected according to which button is selected (prompted by a label on the exhibit itself), by identification of which cell of the DECT system the unit is currently in communication with, or by a combination of these factors. The commentary can be tailored to the user's preferred language by an initialising process when the user is issued with the unit on entering the exhibition. Other user presets may also be made, e.g. a special commentary suitable for children or other special interest groups.
If the portable unit has a visual display audio-visual information can be provided to te user by means of the portable unit.

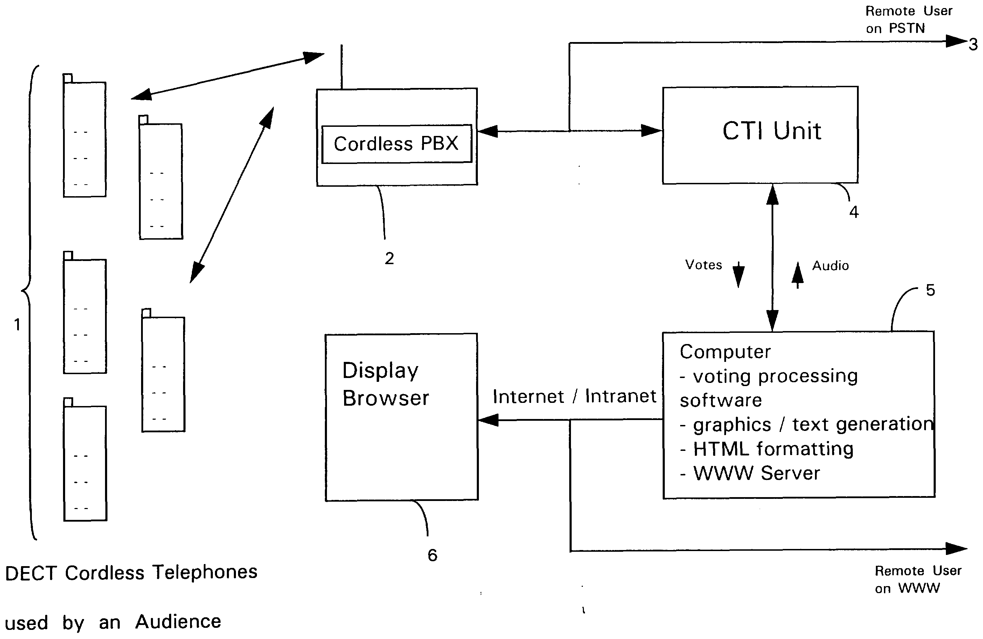

An embodiment of the invention will now be described with reference to the Figure. This embodiment will be described primarily in relation to an audience voting system, but some variations for other purposes will be described and others will be apparent.

Standard DECT cordless telephones 1 are connectable via a wireless Private Branch Exchange (WPBX) 2 to the Public Switched Telephone Network (PSTN) 3. The WPBX 2 is also connected to a Computer/Telephony Interface (CTI) unit 4, to answer calls and respond to user inputs, for example using a voice recognition system, or by the detection of key presses (presented as DTMF (dual-tone multi frequency) signals). The Computer/Telephony Interface unit 4 is connected to a computer 5 which receives basic numeric data, processes it and generates an output, for example graphics. The graphics are converted to HTML format and mounted on an Internet/IntraNet World Wide Web server. Using the server push process, the WWW pages are then pushed to a browser 6 to display the information. Audio information, including recorded and/or synthetic speech, can be included in the HTML and delivered to the browser 6 and also to the Computer/Telephony Interface unit 4 to be forwarded to the cordless phones 1. alternatively, the Computer/Telephony Interface unit 4 could generate synthetic speech under the control of the computer 5.

In use, a number of DECT cordless telephones 1, or limited-function equipment based on DECT technology, are provided to the audience in an auditorium or the like. These cordless telephones 1 are connectable over a radio interface to a wireless private exchange WPBX 2, having one or more fixed base stations within the auditorium. The WPBX 2 has sufficient capacity to handle calls simultaneously from all the cordless telephones: or a combination of time division and frequency division, for example as embodied in the DECT specification.

When votes are to be made, the users are invited to initiate the voting process. This invitation may be made by a human compere in the auditorium, or by means of information displayed using the display browser under the control of the computer 5, or by means of prompts transmitted by way of the Computer/Telephony Interface Unit 4 and the WPBX 2 to the individual telephones 1. This requires the users to set up a call to the Computer/Telephony Interface Unit 4 by dialling a predetermined number. This number may of course be pre-programmed into each cordless telephone using one of the conventional short code memory buttons. The Computer/Telephony Interface Unit can use calling line identity to identify any attempted callers who are not eligible to vote, e.g. calling from remote lines. It should be noted that some remote lines may be authorised to allow votes to be contributed from authorised parties elsewhere than in the local auditorium.

Alternatively, if the Computer/Telephony Interface Unit 4 is used to set up the calls to the cordless telephone remote users, the identity of each connection will be known to the unit. This will again allow authentication of the results.

The choices may be a simple yes/no, or a multiple choice system, using the normal numerical keypad of the telephone. On being invited to vote, the users transmit DTMF tones using the keys of their telephone handsets, or speak into their handsets if voice prompts are to be used. A separate channel is provided between each cordless telephone or remote user and the Computer/Telephony Interface unit 4. The Computer/Telephony Interface unit 4 can therefore identify each individual vote, and ensure that only one vote is received from each telephone. In order to reduce the required bandwidth connecting the WPBX 2 to the computer telephony interface 4, polling may be used. The Computer/Telephony Interface unit 4 system simultaneously establishes contact with as many of the handsets as it can simultaneously communicate with. As it receives a vote from each handset, it ceases communication with that handset and establishes contact with another, from which it has yet to receive a vote. Each user is requested to maintain the selected button of his telephone depressed until he receives an indication, e.g. an audible tone, that his vote has been registered by the Computer/Telephony Interface unit 4 . Similarly, if no DTMF tone is detected from a given handset when that individual line is polled, an audible indication to that effect may be transmitted to the user to indicate that no vote has yet been registered from that handset. The system may be arranged such that if no vote is registered when a handset is polled, the Computer/Telephony Interface unit 4 ceases communication with that handset, and polls another, returning to the first handset later, by which time the user may have reached a decision.

The DTMF tones or other indications received by the Computer/Telephony Interface Unit 4 are processed by this Computer/Telephony Interface Unit 4 into raw voting data which is transmitted to the computer 5. The computer 5 comprises vote processing software for analysing the raw voting data, in order to analyse the results. In general this will include graphics or text generation to represent the statistical voting data, which can be transmitted by HTML formatting to a WorldWideWeb server or local server, for display on a display browser 6. This allows the audience to receive the voting results. Since the identity of each handset is known to the Computer/Telephony Interface Unit 4, demographic data previously stored relating to the individual users of the handsets, or to earlier voting results, may be correlated to provide further information for processing by the computer 5. Similarly, in an examination, the individual responses can be processed to assess each user's total score. Remote users can receive the data over any suitable communications link, such as by a connection through the Internet to the computer 5.

The computer 5 can also generate audio information for transmission by way of the Computer/Telephony Interface Unit 4 and the WPBX 2 to the audience's telephones, 1, 3. Audio information may relate to the statistical results of the voting processing carried out by the computer 5, in addition to or as an alternative to the display by the display browser 6. Audio information may also be provided in order to present the voting instructions in a tailored manner to the individual users. For example audio information may be supplied to the Computer/Telephony Interface Unit 4 in several languages, the appropriate language being selected by the Computer/Telephony Interface Unit 4 for transmission over each individual telephone connection by way of the WPBX 2 to the individual DECT cordless telephones 1, and the remote users 3. In an examination, the various possible answers, from which the correct answer is to be selected, may be presented to different users in a different order, so that the keystrokes of one candidate cannot be copied by another to achieve the same result. Alternatively, the questions may be presented in a different order to different candidates.

In a variation of the system for use in exhibitions, museums, tourist attractions, etc, the information to be transmitted may be selected according to the current location of the user as determined by identification of the currently serving radio base station, and pre-progranmmed information selected by the user, such as preferred language, special interests, age, or time available.

## Claims

1. A Computer/Telephony Interface Unit having means for receiving a plurality of data-carrying telephone calls concurrently, means for storing the data carried in the telephone calls, and means for processing the data so received to generate information relating to the data received.

2. A computer/telephony interface unit as claimed in claim 1, arranged to detect and verify the identities of the telephones from which the incoming data is received.

3. A computer/telephony interface unit according to claim 1 or claim 2, further comprising means for transmitting audio information over the telephone connections to the originating telephones.

4. A Computer/Telephony Interface Unit according to claim 3, comprising means for receiving a number of audio inputs, and means for selecting, for each telephone line, one of the audio inputs for transmission to the respective telephone line.

5. A Computer/Telephony Interface Unit according to any preceding claim, associated with a private telephone exchange system for receiving the telephone calls.

6. A Computer/Telephony Interface Unit according to claim 5 wherein the telephone exchange is a wireless telephone exchange.

7. A method of processing data generated by a plurality of users, comprising the steps of making a telephone call between each user and a processing unit, each call conveying the data generated by the respective user, and processing the data so received to generate information relating to the data received.

8. A method as claimed in claim 7, wherein the processing includes the detection and verification of the identities of the telephones from which the data is received.

9. A method according to claim 7 or claim 8, wherein audio information is transmitted over the telephone connections to the originating telephones.

10. A method according to claim 9, wherein, for each telephone line, one of a plurality of audio inputs is selected for transmission.

11. A method according to claim 10, wherein the plurality of audio inputs each require different responses from the respective users.

12. A method according to claim 7, 8, 9, 10 or 11 wherein the location of the telephone is identified, and the information generated is selected according to said location.

13. A method as claimed in claim 12, wherein the telephone communicates with the processing unit by means of a cordless connection, using a network of cordless base stations, and the location of the telephone is identified by reference to the base station currently in cordless communication with the telephone

14. A method according to claim 7, 8, 9, 10, 11, 12, or 13, wherein the telephone calls are made through a private exchange.

15. A method according to claim 12 wherein the telephone exchange is a wireless telephone exchange.

16. A method according to any of claims 7 to 15, wherein the processing unit generates an output for transmission using Internet protocols.
